# EUROPEAN PATENT SPECIFICATION

(11) **EP 1 543 936 B1**
(45) Date of publication and mention of the grant of the patent: **27.06.2007**
(21) Application number: 04023034.4
(22) Date of filing: 28.09.2004
(51) Int. Cl.: B29C 45/28

(54) **Check valve particularly for molds of plastic molding machines**
Rückschlagventil insbesondere für Werkzeuge von Kunststoffverarbeitungsmaschinen
Clapet de non retour notamment pour des moules des machines de moulage de la matière plastique

(30) Priority: 17.12.2003 IT PD20030302
(43) Date of publication of application: 22.06.2005
(73) Proprietor: Main Group Corporation S.r.l., 35129 Padova (IT)
(72) Inventor: Lorenzin, Lorenzo, 35031 Abano Terme Prov. of Padova (IT)
(74) Representative: Modiano, Micaela Nadia

(56) References cited:
- US-A- 3 374 502
- US-A- 3 690 800
- US-A- 3 895 747
- US-A- 4 213 751

## Description

The present invention relates to a check valve particularly for molds of plastic molding machines.

Currently known molds for plastic materials and particularly molds for plastic materials that expand considerably once injected into a mold, such as for example ethyl vinyl acetate, conveniently have a needle or guillotine device that is located proximate to the injection hole on which the injector makes contact.

Devices of this type are known, for instance, from documents US-A-3895747 and US-A-3690800.

In these molds, which form at least two and generally four impressions and have an internal temperature of approximately 170°C, the plastic material is injected at a temperature of approximately 100°C.

Such thermal gap causes the expansion of the injected plastic material.

By expanding inside the mold, the plastic material tends to rise along the injection channel, where it is blocked by a needle or guillotine device, as mentioned.

This device is managed by means of a hydraulic cylinder and is suitable to prevent the uncontrolled escape of material from the mold during the cross-linking step.

A valve of this type is known, for instance, from document US-A-4213751.

The opening/closure of such needle can be controlled advantageously by timers or pressure transducers capable of detecting the pressure of the material inside the mold.

In this manner, the excess material can be made to flow out from the injection channel depending on the molding requirements, simply by managing, by way of electronic control methods of a known type, the opening/closure sequences of the needle/guillotine.

For example, the opening of the needle device during the expansion of the injected plastic material allows a quantity of said material to exit from the mold, so that the pressure produced by the expansion has the advantage of optimizing the filling of the impressions of the mold, without the disadvantage of forming flash, which is aesthetically unpleasant and expensive to remove, at the closure lines of the mold parts.

These known needle or guillotine devices, while being greatly appreciated in view of the flexibility with which they can be managed, and being widely used for this reason, have drawbacks.

As described, the provision of these devices requires, in addition to machining on the mold in order to provide a suitable receptacle therein, the use of an actuation cylinder.

Said actuation cylinder, which is in itself an important cost factor, must be managed by way of electronic control means, which entail further costs, both in terms of hardware and in terms of operators specialized in the use of said control means.

A check valve comprising a shut off ball freely mounted in the bore of the sprue bushing is known from document US-A-3374502.

The aim of the present invention is to provide a check valve particularly for molds of plastic molding machines that is capable of obviating the problems and drawbacks shown by known types of needle or guillotine device.

Within this aim, an object of the present invention is to provide a check valve that allows to optimize the distribution of the plastic material in the various impressions formed by a same mold, producing a uniform pressure inside them.

Another object of the present invention is to provide a check valve that allows to provide products that are substantially free from flash while reducing sprue to a minimum.

Another object of the present invention is to provide a check valve that can be provided easily and cheaply in known molds.

Another object of the present invention is to provide a check valve particularly for molds of plastic molding machines that can be manufactured with known equipment and technologies.

This aim and these and other objects that will become better apparent hereinafter are achieved by a check valve particularly for molds of plastic molding machines, which is constituted by a valve body that is accommodated in a complementarily shaped seat of a mold for plastic material, said valve body being provided with an injection channel inside which a flow control element can float freely between a port for introducing the plastic material and containment means that are suitable to prevent its escape from the valve body and form passage openings for said plastic material, said flow control element being adapted to be pushed by the pressure of the plastic material in said injection channel, said check valve being characterized in that said valve body seat has a stroke volume for a reversible translational stroke of said valve body from the inside outward, said valve body having at least one portion that is suitable to abut against first means for stopping the stroke toward the outside of said mold and against second means for stopping the stroke toward the inside of said mold, said translational stroke from the inside outward clearing an expansion chamber for the injected plastic material.

Further characteristics and advantages of the invention will become better apparent from the following detailed description of a preferred but not exclusive embodiment thereof, illustrated by way of nonlimiting example in the accompanying drawings, wherein:

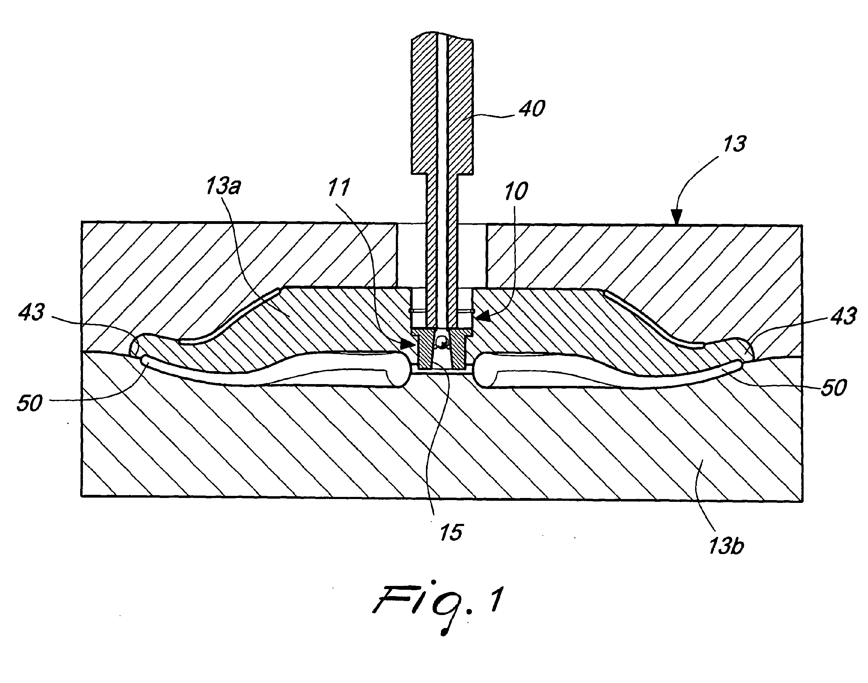

Figure 1 is a sectional side view of a mold provided with a check valve according to the invention;
Figure 2 is a sectional side view of a check valve according to the invention in a first step of a molding operation;
Figure 3 is a sectional side view of a check valve according to the invention as shown in Figure 2, in a second step of a molding operation;
Figure 4 is a sectional side view of a check valve according to the invention as shown in Figures 2 and 3, in a third step of a molding operation;
Figure 5 is a cross-sectional, partial view of the check valve according to the invention, taken on line V-V of Figure 2.

With reference to the figures, a check valve, particularly for molds of plastic molding machines according to the invention, is generally designated by the reference numeral 10.

The check valve 10 is constituted by a valve body 11, which is accommodated in a complementarily shaped seat 12 of a mold 13 for plastic material 14.

The mold 13 is composed substantially of a first mold part 13a and a second mold part 13b.

The seat 12, in this embodiment of the invention, is located on the first mold part 13a.

The valve body 11 has an injection channel 15, inside which a flow control element 16 can float freely.

The flow control element 16 is constituted, in this embodiment, by a ball 16a.

The ball 16a is arranged between a port 17 for introducing plastic material 14 and containment means 18 that are suitable to prevent its escape from the valve body 11.

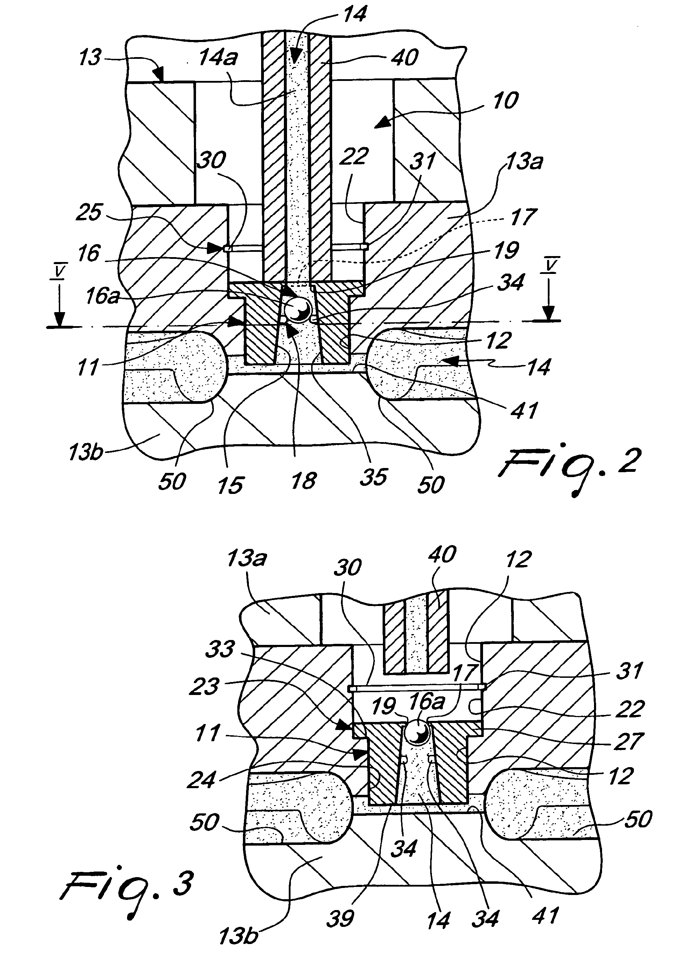

The ball 16a is pushed, during injection, against the containment means 18 by the pressure of the plastic material 14 injected into the injection channel 15, as shown in Figure 2.

In the step for the expansion of the plastic material 14 inside the mold 13, shown in Figure 3, the ball 16a is pressed against a choke 19 of the inlet port 17 of the injection channel 15, so as to obstruct the inlet port 17.

The containment means 18 form passage openings 21 for the plastic material 14, so as to stop the stroke of the flow control element 16, i.e., the ball 16a, without preventing the flow of the molding material 14.

The seat 12 of the valve body 11 has a stroke volume 22 that is such as to allow a reversible translational stroke, from the inside outward, of the valve body 11.

Such translational stroke from the inside outward clears an expansion chamber 24 (see Figure 3) for the plastic material 14.

The valve body 11 has a portion 23 that is suitable to abut against first means 25 for stopping the stroke toward the outside of the first mold part 13 a and against second means 26 for stopping the stroke toward the inside of the mold part 13 a.

The portion 23 suitable for abutment against first and second stop means 25, 26 is provided by a perimetric protrusion 27 that is monolithic with the valve body 11.

Since the valve body 11 is substantially cylindrical, the perimetric protrusion 27 is annular and is arranged at the end of the valve body 11 so as to be monolithic therewith.

The first stop means 25 are constituted by an abutment ring 30 that is inserted in a corresponding slot 31 provided in the seat 12.

The second stop means 26 are constituted by a shoulder 33 for transition between the stroke volume 22 and the expansion chamber 24.

The containment means 18 for the flow control element 16 are constituted by at least three equidistant tabs 34 that are arranged in a co-planar configuration so as to protrude from the internal surface 35 of the injection channel 15.

The tabs 34 form the passage openings 21 for the plastic material 14.

The operation of the valve 10 is as follows.

The injector 40 rests against the valve body 11 and injects into the injection channel 15 fluid plastic material 14, which fills the internal channels 41 of the mold 13 and the impressions 50.

The plastic material 14 can be of the thermosetting type, for example ethyl vinyl acetate.

The valve body 11 in turn is locked in abutment against the shoulder 33 by way of its perimetric protrusion 27.

The plastic material 14 that arrives from the injector pushes the ball 16a against the tabs 34, opening the inlet port 17, as shown in Figure 2.

At the end of the injection operation, the injector 40 moves away from the valve body 11 at least beyond the abutment ring 30.

In a first step of the expansion of the plastic material 14, shown in Figure 3, the ball 16a is pushed by the plastic material 14 itself toward the choke 19 of the port 17 and pressed thereat so as to obstruct said hole 17.

If at this point the plastic material 14 inside the mold expands further, instead of penetrating in the mating lines 43 between the first and second mold parts 13a and 13b and form unwanted flash, it is free to apply thrust to the bottom 39 of the valve body 11.

Such thrust causes the valve body 11 to slide in the stroke volume 22.

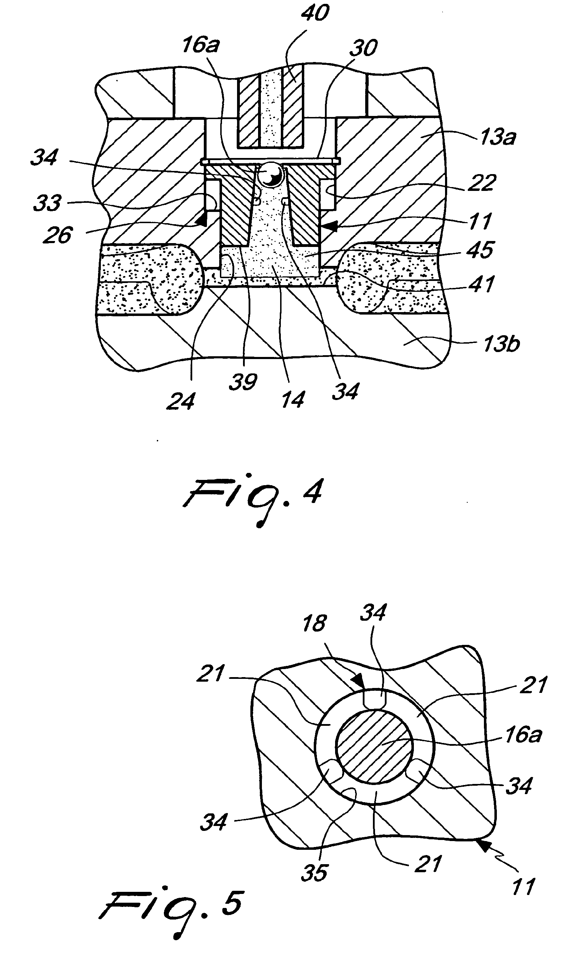

The valve body 11 is free to perform a translational motion up to the abutment ring 30, as shown in Figure 4, by which it is blocked in its motion toward the outside of the mold part 13a.

The translational motion of the valve body 11 toward the ring 30 makes the expansion chamber 24 available to the expansion of the plastic material 14b.

The expansion chamber 24 has dimensions that depend on the number and volume of the impressions 50 formed by the mold 13 and is such as to avoid the formation of excessive and disadvantageous sprue 45.

Once the molded products have been extracted and the mold 13 has been restored for a new molding operation, the valve body 11 is returned into abutment against the shoulder 33 by the thrust applied by the injector 40, which rests on the valve body 11.

As an alternative to its immediate retraction at the end of the injection operation, the injector 40 is kept in contact with the valve body 11 for a time interval that can be preset according to the number, size and shape of the impressions 50 and according to the amount of plastic material that is injected.

This alternative operation delays the upward motion of the valve body 11, which is pushed upward by the plastic material 14b that expands inside the mold 13.

This allows optimum filling of all the impressions 50, even in the regions that lie furthest from the injection channel 15.

The injected plastic material, by expanding, in fact first blocks the inlet port 17 by pushing the ball 16a against it; then the injector 40, in contact with the valve body 11, prevents said material, for a predefined time interval, from expanding in the expansion chamber 24, so that it can instead penetrate into the impressions 50 in the best possible manner.

Finally, after lifting the injector 40 so as to free the upward motion of the valve body 11, said expanding plastic material pushes the valve body 11 and ends its expansion in the chamber 24, which is freed by the movement of the valve body 11, preventing the forming of flash.

In practice it has been found that the invention thus described solves the problems noted in known types of needle or guillotine device, particularly for molds of plastic molding machines.

In particular, the present invention provides a check valve that allows to optimize the distribution of the plastic material in the various impressions formed by a same mold, producing a uniform pressure inside them.

Moreover, the present invention provides a check valve that allows to provide products that are substantially free from flash while minimizing sprue.

Further, the present invention provides a check valve that can be provided easily and cheaply in known molds.

Moreover, the present invention provides a check valve, particularly for molds of plastic molding machines, that can be manufactured with known systems and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The present application claims priority on Italian Patent Application No.: IT2003PD00302.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A check valve, particularly for molds of plastic molding machines, constituted by a valve body (11) that is accommodated in a complementarily shaped seat (12) of a mold (13) for plastic material (14), said valve body (11) being provided with an injection channel (15) inside which a flow control element (16) can float freely between an inlet port (17) for introducing the plastic material (14) and containment means (18) that are suitable to prevent its escape from the valve body (11) and form passage openings (21) for said plastic material (14), said flow control element (16) being pushed by the pressure of the plastic material (14) in said injection channel (15), said check valve (10) being **characterized in that** said seat (12) of the valve body (11) has a stroke volume (22) for a reversible translational stroke of said valve body (11) from the inside outward, said valve body (11) having at least one portion (23) that is suitable to abut against first means (25) for stopping the stroke toward the outside of said mold (13) and against second means (26) for stopping the stroke toward the inside of said mold (13), said translational stroke from the inside outward clearing an expansion chamber (24) for the plastic material (14).

2. The check valve according to claim 1, **characterized in that** said portion (23) that is suitable for abutment against said first stop means (25) and said second stop means (26) is provided by a perimetric protrusion (27) that is monolithic with said valve body (11).

3. The check valve according to claim 1, **characterized in that** said first means (25) for stopping the stroke of the valve body (11) toward the outside of said mold (13) are constituted by an abutment ring (30) that is inserted in a corresponding slot (31) on said seat (12).

4. The check valve according to claim 1, **characterized in that** said second means (26) for stopping the stroke of the valve body (11) toward the inside of said mold (13) are constituted by a shoulder (33) for transition between said stroke volume (22) and said expansion chamber (24).

5. The check valve according to claim 1, **characterized in that** said valve body (11) is substantially cylindrical.

6. The check valve according to claim 2, **characterized in that** said perimetric protrusion (27) is annular and is arranged at the end of said valve body (11) so as to be monolithic therewith.

7. The check valve according to claim 1, **characterized in that** said inlet port (17) is provided internally with a choke (19) that is suitable to be obstructed by said flow control element (16).

8. The check valve according to claim 1, **characterized in that** said containment means (18) for said flow control element (16) that form said passage openings (21) for the plastic material (14) are constituted by at least three equidistant tabs (34) that are arranged in a co-planar configuration so as to protrude from the internal surface (35) of said injection channel (15).

9. The check valve according to claim 1, **characterized in that** said flow control element (16) is a ball (16a).

## Patentansprüche

1. Ein Rückschlagventil, insbesondere für Formen von Plastikformmaschinen, gebildet von einem Ventilkörper (11), der in einem komplementär geformten Sitz (12) einer Form (13) für Plastikmaterial (14) untergebracht ist, wobei der Ventilkörper (11) mit einem Einspritzkanal (15) bereitgestellt ist, in dem ein Durchflussregelungselement (16) frei zwischen einer Einlassöffnung (17) zum Einführen des Plastikmaterials (14) und Eindämmungsmitteln (18), die geeignet sind, sein Entweichen aus dem Ventilkörper (11) zu verhindern und Durchlassöffnungen (21) für das Plastikmaterial (14) zu bilden, schweben kann, wobei das Durchflussregelungselement (16) durch den Druck des Plastikmaterials (14) im Einspritzkanal (15) vorangetrieben wird, wobei das Rückschlagventil (10) **dadurch gekennzeichnet ist, dass** der Sitz (12) des Ventilkörpers (11) einen Hubraum (22) für einen umkehrbaren Translationshub des Ventilkörpers (11) vom Inneren nach aussen aufweist, wobei der Ventilkörper (11) mindestens einen Teil (23) aufweist, der geeignet ist, zur Hubbegrenzung in Richtung der Aussenseite der Form (13) gegen erste Mittel (25) und zur Hubbegrenzung in Richtung der Innenseite der Form (13) gegen zweite Mittel (26) anzustoßen, wobei der Translationshub vom Inneren nach aussen eine Erweiterungskammer (24) für das Plastikmaterial (14) freilegt.

2. Das Rückschlagventil gemäß Anspruch 1, **dadurch gekennzeichnet, dass** der Teil (23), der zum Anstoß gegen das erste Stoppmittel (25) und das zweite Stoppmittel (26) geeignet ist, durch eine umlaufende Vorwölbung (27) bereitgestellt ist, die mit dem Ventilkörper (11) monolithisch ist.

3. Das Rückschlagventil gemäß Anspruch 1, **dadurch gekennzeichnet, dass** die ersten Mittel (25) zur Hubbegrenzung des Ventilkörpers (11) in Richtung der Aussenseite der Form (13) von einem Stoßring (30) gebildet sind, der in einer korrespondierenden Nut (31) am Sitz (12) eingefügt ist.

4. Das Rückschlagventil gemäß Anspruch 1, **dadurch gekennzeichnet, dass** die zweiten Mittel (26) zur Hubbegrenzung des Ventilkörpers (11) in Richtung der Innenseite der Form (13) aus einer Schulter (33) zur Überleitung zwischen dem Hubraum (22) und der Erweiterungskammer (24) gebildet sind.

5. Das Rückschlagventil gemäß Anspruch 1, **dadurch gekennzeichnet, dass** der Ventilkörper (11) im Wesentlichen zylinderförmig ist.

6. Das Rückschlagventil gemäß Anspruch 2, **dadurch gekennzeichnet, dass** die umlaufende Vorwölbung (27) ringförmig ist und am Ende des Ventilkörpers (11) angeordnet ist, um monolithisch damit zu sein.

7. Das Rückschlagventil gemäß Anspruch 1, **dadurch gekennzeichnet, dass** die Einlassöffnung (17) innen mit einer Verengung (19) bereitgestellt ist, die geeignet ist von dem Durchflussregelungselement (16) versperrt zu werden.

8. Das Rückschlagventil gemäß Anspruch 1, **dadurch gekennzeichnet, dass** die Eindämmungsmittel (18) für das Durchflussregelungselement (16), die die Durchlassöffnungen (21) für das Plastikmaterial (14) bilden, aus mindestens drei äquidistanten Vorsprüngen (34) gebildet sind, die in einer koplanaren Konfiguration angeordnet sind, um von der Innenfläche (35) des Einspritzkanals (15) hervorzustehen.

9. Das Rückschlagventil gemäß Anspruch 1, **dadurch gekennzeichnet, dass** das Durchflussregelungselement (16) eine Kugel (16a) ist.

## Revendications

1. Clapet de non-retour, en particulier pour des moules de machines de moulage de plastique, constitué d'un corps de clapet (11) qui est logé dans un siège (12) conformé de façon complémentaire d'un moule (13) pour la matière plastique (14), ledit corps de valve (11) étant muni d'un canal d'injection (15) à l'intérieur duquel un élément de contrôle de débit (16) peut flotter librement entre un orifice d'entrée (17) pour l'introduction de la matière plastique (14) et des moyens de confinement (18) qui sont appropriés à prévenir son échappement du corps de clapet (11) et qui forment des ouvertures de passage (21) pour ladite matière plastique (14), ledit élément de contrôle de débit (16) étant poussé par la pression de la matière plastique (14) dans ledit canal d'injection (15), ledit clapet de non-retour (10) étant **caractérisé en ce que** ledit siège (12) du corps de clapet (11) présente un volume de course (22) pour une course translationnelle réversible dudit corps de clapet (11) de l'intérieur vers l'extérieur, ledit corps de clapet (11) présentant au moins une partie (23) qui est appropriée pour la butée contre des premiers moyens (25) pour arrêter la course vers l'extérieur dudit moule (13) et contre des deuxièmes moyens (26) pour arrêter la course vers l'intérieur dudit moule (13), ladite course translationnelle depuis l'intérieur vers l'extérieur dégageant une chambre d'expansion (24) pour la matière plastique (14).

2. Clapet de non-retour selon la revendication 1, **caractérisé en ce que** ladite partie (23) qui est appropriée pour la butée contre lesdits premiers moyens d'arrêt (25) et lesdits deuxièmes moyens d'arrêt (26) est munie d'une saillie périmétrique (27) qui est monolithique avec ledit corps de clapet (11).

3. Clapet de non-retour selon la revendication 1, **caractérisé en ce que** lesdits premiers moyens (25) pour arrêter la course du corps de clapet (11) vers l'extérieur dudit moule (13) sont constitués par un anneau de butée (30) qui est inséré dans une fente (31) correspondante sur ledit siège (12).

4. Clapet de non-retour selon la revendication 1, **caractérisé en ce que** lesdits deuxièmes moyens (26) pour arrêter la course du corps de clapet (11) vers l'intérieur dudit moule (13) sont constitués par une épaulement (33) pour la transition entre ledit volume de course (22) et ladite chambre d'expansion (24).

5. Clapet de non-retour selon la revendication 1, **caractérisé en ce que** ledit corps de clapet (11) est sensiblement cylindrique.

6. Clapet de non-retour selon la revendication 2, **caractérisé en ce que** ladite saillie périmétrique (27) est annulaire et est agencée à l'extrémité dudit corps de clapet (11) de sorte à être monolithique avec celui-ci.

7. Clapet de non-retour selon la revendication 1, **caractérisé en ce que** ledit orifice d'entrée (17) est muni intérieurement d'un étranglement (19) qui est approprié à être obstruer par ledit élément de contrôle de débit (16).

8. Clapet de non-retour selon la revendication 1, **caractérisé en ce que** lesdits moyens de confinement (18) pour ledit élément de contrôle de débit (16) qui forment lesdites ouvertures de passage (21) pour la matière plastique (14) sont constitués par au moins trois onglets équidistants (34) qui sont agencés dans une configuration coplanaire de façon à faire saillie de la surface interne (35) dudit canal d'injection (15).

9. Clapet de non-retour selon la revendication 1, **caractérisé en ce que** ledit élément de contrôle de débit (16) est une bille (16a).
